# FASCICULE DE BREVET EUROPEEN

(11) **EP 0 936 389 B1**
(45) Date de publication et mention de la délivrance du brevet: **11.12.2002**
(21) Numéro de dépôt: 99400291.3
(22) Date de dépôt: 09.02.1999
(51) Int. Cl.: F16L 11/02, F16L 11/16

(54) **Tuyau pour le transport de fluide gazeux, notamment dans les véhicules à moteur, et son procédé de fabrication**
Leitungsrohr zum Fördern eines gasförmigen Mediums, insbesondere zur Verwendung in Fahrzeugen und Verfahren zur Herstellung
Pipe for conveying a gaseous medium, particularly for use in motor vehicles and method of fabrication

(30) Priorité: 17.02.1998 FR 9801883
(43) Date de publication de la demande: 18.08.1999
(73) Titulaire: WECOSTA, 59058 Roubaix Cedex 1 (FR)
(72) Inventeur: Lepoutre, Henri, 59058 Roubaix Cedex 1 (FR)
(74) Mandataire: Eidelsberg, Victor Albert

(56) Documents cités:
- EP-A- 0 643 248
- FR-A- 2 720 471
- GB-A- 1 054 392
- US-A- 3 739 815

## Description

La présente invention concerne les tuyaux qui sont utilisés pour le transport de fluides gazeux.

Elle s'applique en particulier, mais de manière non limitative, à de tels tuyaux qui sont utilisés dans les véhicules à moteur pour le transport d'air, et plus spécialement pour l'admission de l'air de combustion dans le moteur ou pour la ventilation de l'habitacle.

Le document FR-A-2.720.471 décrit un tuyau pour le transport de fluides gazeux comportant une couche extérieure et une couche intérieure. Les deux couches intérieure et extérieure sont en un même matériau fibreux non tissé. En outre, les deux couches ne sont pas solidaires l'une de l'autre. Ce document représente le document le plus proche de l'art antérieur et correspond au préambule de la revendication 1.

Le document GB 1.054.392 décrit un tuyau destiné au transport de liquide, constitué de deux couches solidaires l'une de l'autre, la couche intérieure étant une couche en résine de polyéther et la couche extérieure étant une couche d'un tissé en fibre de verre.

L'invention a pour but de fournir un tuyau de ce type qui est d'une conception simple et peu onéreuse, et qui est d'une mise en place aisée grâce à ses caractéristiques de souplesse, aussi bien axialement qu'en flexion.

A cet effet, l'invention a pour objet un tuyau tel que défini dans la revendication 1 comportant une couche extérieure en une matière souple étanche aux fluides, et une couche intérieure fibreuse non-tissée solidaire de la couche extérieure.

La couche extérieure assure l'étanchéité du tuyau, tandis que la couche intérieure fibreuse constitue une sorte d'ossature pour le tuyau et, dans une certaine mesure, participe activement à l'atténuation des sons.

Par exemple, la couche intérieure peut être collée ou soudée par fusion partielle sous pression avec la couche extérieure.

Cette couche extérieure est par exemple constituée par une fine pellicule souple, d'une épaisseur par exemple d'environ 60 microns, cette couche pouvant être en polyoléfine, notamment en polyéthylène.

Quant à la couche intérieure, elle est avantageusement du type polyester et, dans un exemple de réalisation, elle comporte, en poids, environ 20 % de fibres de copolyester ayant un point de fusion d'environ 140°C, le reste étant des fibres de polyester ayant un point de fusion d'environ 180°C.

Avantageusement, les deux couches s'étendent sur la même largeur et sont enroulées en hélice, avec chevauchement partiel des spires successives.

De préférence, et d'une manière connue en soi, on peut interposer, entre les parties de spires en chevauchement, un fil de renfort hélicoïdal, par exemple métallique ou en matière plastique, notamment également en polyester.

ce fil de renfort est de préférence en contact direct avec la face extérieure de la couche extérieure d'une spire et la face intérieure de la couche intérieure de la spire suivante, dans le cas où les deux couches sont superposées sur toute leur largeur commune. En variante, cette couche intérieure peut être située soit de part et d'autre du fil de renfort, soit seulement d'un côté de ce fil. Dans ce dernier cas, la couche intérieure peut n'exister que sur la partie d'une spire qui ne chevauche pas la spire précédente.

L'invention concerne également un procédé de fabrication de ce tuyau tel que déffini dans la revendication 14.

Avantageusement, le tuyau est obtenu, préalablement à son chauffage et à sa déformation ci-dessus, par enroulement en hélice d'une bande composite avec chevauchement partiel des spires, les parties de spires en chevauchement étant solidarisées entre elles, notamment par collage ou par fusion partielle sous pression.

Suivant un mode de mise en oeuvre, cette bande composite est obtenue par l'assemblage, préalablement à l'enroulement en hélice, de deux bandes élémentaires, constituées par lesdites couches extérieure et intérieure, cet assemblage se faisant par collage ou par fusion partielle sous pression. De préférence, ces deux couches superposées ont la même largeur.

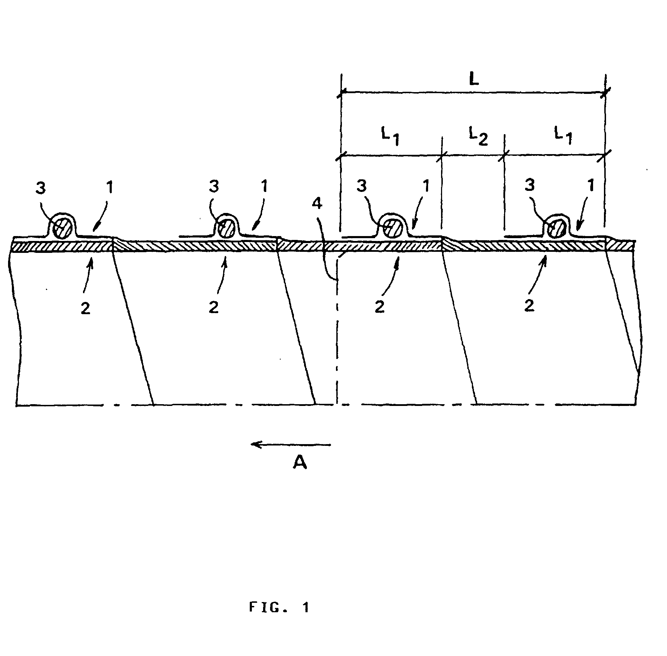

On comprendra bien l'invention à la lecture du complément de description qui va suivre et en référence au dessin annexé qui fait partie de la description et dont la figure unique est une coupe axiale montrant une partie d'un tuyau établi suivant un mode de réalisation de l'invention.

On a représenté sur la figure un tuyau qui est destiné à être utilisé dans l'application préférée ci-dessus et qui comporte une couche extérieure 1 en une matière souple étanche aux fluides, et une couche intérieure fibreuse non-tissée 2 solidaire de la couche extérieure 1.

La couche extérieure 1 est par exemple constituée par une fine pellicule souple en polyoléfine, notamment en polyéthylène, d'une épaisseur de préférence d'environ 60 microns.

Quant à la couche intérieure 2, elle est du type polyester et peut comporter, en poids, environ 20 % de fibres de copolyester ayant un point de fusion d'environ 140°C, le reste étant des fibres de polyester ayant un point de fusion d'environ 180°C.

Ce tuyau est de préférence obtenu par l'enroulement en hélice de deux bandes, de préférence de même largeur, constituées respectivement par la couche extérieure 1 et la couche intérieure 2, avec chevauchement partiel des spires, comme représenté sur la figure.

De préférence, cet enroulement se fait à partir d'une bande composite qui, préalablement à l'enroulement, est constituée par l'assemblage des deux couches, la solidarisation des deux couches pouvant se faire par collage ou par fusion partielle sous pression. Ces deux couches sont donc assemblées et superposées sur leur largeur commune.

Cette bande composite présente, après enroulement en hélice, une largeur axiale L de quelques centimètres qui se décompose en une première partie de largeur L₁ dans laquelle, à partir de son bord avant, une spire donnée chevauche la partie marginale arrière de la spire précédente, une deuxième partie de largeur L₂ dans laquelle il n'y a pas chevauchement de spires, et une troisième partie de largeur L₁ dans laquelle cette spire donnée est chevauchée par la spire suivante en considérant le sens d'enroulement.

Comme indiqué précédemment, les deux couches 1 et 2 sont superposées sur leur largeur commune mais, dans le mode de réalisation simplifié représenté, la couche intérieure 2 ne s'étend que sur une partie de la largeur de la bande, à partir du bord arrière de celle-ci, cette fraction de largeur correspondant à la partie de la bande qui ne chevauche pas la spire précédente ; en d'autres termes, la couche 2 ne s'étend qu'à partir d'une distance L₁ du bord avant de la bande lorsque celle-ci est enroulée en hélice, pour aller jusqu'au bord arrière.

Dans cet agencement, les spires constituées par la couche intérieure 2 sont jointives, tandis que les spires constituées par la couche extérieure 1 sont à chevauchement partiel.

Dans les deux cas, l'assemblage des spires successives, dans leur zone de chevauchement, peut se faire par collage ou, de préférence, par fusion partielle sous pression.

De manière connue en soi, on peut avantageusement interposer, entre les parties de spires en chevauchement, un fil de renfort hélicoïdal 3, par exemple métallique ou en matière plastique, notamment en polyester. Ce fil de renfort est situé par exemple au milieu de la zone de chevauchement de deux spires successives.

Dans le cas où les deux couches 1 et 2 sont superposées sur leur largeur commune, le fil de renfort 3 est donc situé entre la face extérieure de la couche extérieure d'une spire et la face intérieure de la couche intérieure de la spire suivante, en considérant le sens de formation de l'hélice.

Toutefois, la couche intérieure 2 peut ne pas exister dans la zone de ce fil de renfort 3, soit parce, qu'elle est située seulement de part et d'autre de ce fil, soit parce que, comme représenté sur la figure, elle n'existe que dans la zone où une spire ne chevauche pas la spire précédente.

Suivant une caractéristique avantageuse de l'invention, on utilise les propriétés thermofusibles d'une partie au moins des fibres de la couche intérieure 2 pour donner au tuyau, après sa fabrication initiale, une forme finale différente, c'est-à-dire de section non constante. Suivant cette caractéristique, on chauffe le tuyau pour faire fondre au moins partiellement les fibres thermofusibles, on déforme de manière forcée le tuyau jusqu'à cette forme finale, et on laisse refroidir ou on refroidit le tuyau en le maintenant dans cette forme finale, cette dernière étant maintenue par les fibres thermofusibles qui, en se refroidissant, se lient par soudage entre elles et aux autres fibres de manière à réaliser une ossature.

Une autre caractéristique avantageuse de l'invention réside en ce que, lors de la formation du tuyau par enroulement en hélice sur un mandrin schématisé en 4, le tuyau glisse facilement sur celui-ci, dans la direction A d'extraction, grâce au faible coefficient de frottement de la couche intérieure fibreuse.

Bien entendu, l'invention n'est pas limitée à l'exemple qui a été décrit ci-dessus ; on pourrait au contraire concevoir diverses variantes sans sortir pour autant de son cadre.

## Revendications

1. Tuyau pour le transport de fluides gazeux, notamment dans les véhicules à moteur, et en particulier pour l'admission de l'air de combustion du moteur ou pour la ventilation de l'habitacle, comportant une couche (2) intérieure et une couche (1) extérieure, la couche intérieurs étant en un matériau fibreux non tissé, **caractérisé en ce que** la couche extérieure (1) est en une matière souple étanche aux fluides, et la couche intérieure fibreuse non-tissée (2) est solidaire de la couche extérieure.

2. Tuyau selon la revendication 1, **caractérisé en ce que** la couche (2) intérieure est collée ou soudée par fusion partielle sous pression sur la couche (1) extérieure.

3. Tuyau selon l'une des revendications 1 et 2, **caractérisé en ce que** la couche extérieure est constituée par une fine pellicule souple, d'une épaisseur de préférence d'environ 60 microns.

4. Tuyau selon l'une des revendications 1 à 3, **caractérisé en ce que** la couche extérieurs est en polyoléfine, notamment en polyéthylène.

5. Tuyau selon l'une des revendications 1 à 4, **caractérisé en ce que** la couche intérieure est du type polyester.

6. Tuyau selon la revendication 5, **caractérisé en ce que** la couche intérieure comporte, en poids, environ 20 % de fibres de copolyester ayant un point de fusion d'environ 140°C, le reste étant des fibres de polyester ayant un point de fusion d'environ 180°C.

7. Tuyau selon l'une des revendications 1 à 6, **caractérisé en ce que** les deux couches sont superposées sur leur largeur commune.

8. Tuyau selon l'une des revendications 1 à 7, **caractérisé en ce que** les deux couches sont enroulées en hélice avec chevauchement partiel des spires successives.

9. Tuyau selon la revendication 8, **caractérisé en ce qu'**un fil de renfort hélicoïdal (3), par exemple métallique ou en matière plastique, notamment en polyester, est interposé entre les parties de spires en chevauchement.

10. Tuyau selon la revendication 9, **caractérisé en ce que** le fil de renfort est en contact direct avec la face extérieure de la couche extérieure d'une spire et la face intérieure de la couche extérieure ou intérieure de la spire suivante.

11. Tuyau selon l'une des revendications 9 et 10, **caractérisé en ce que** la couche intérieure est située de part et d'autre du fil de renfort.

12. Tuyau selon l'une des revendications 9 et 10, **caractérisé en ce que** la couche intérieure est située seulement d'un côté du fil de renfort.

13. Tuyau selon l'une des revendications 8 à 11, **caractérisé en ce que** la couche intérieure n'existe que sur la partie d'une spire qui ne chevauche pas la spire précédente.

14. Procédé de fabrication d'un tuyau selon l'une des revendications 1 à 13 pour le transport de fluides gazeux, notamment dans les véhicules à moteur et en particulier pour l'admission de l'air de combustion du moteur ou pour la ventilation de l'habitacle, **caractérisé en ce qu'**il consiste à
- prendre une couche extérieure (1) en une matière souple étanche aux fluides,
- prendre une couche intérieure (2) fibreuse non tissée ; et
- solidariser la couche intérieure fibreuse non tissée à la couche extérieure.

15. Procédé de fabrication d'un tuyau selon la revendication 14, **caractérisé en ce qu'**il consiste à réaliser la couche intérieure fibreuse au moins en partie en fibres thermofusibles, à chauffer le tuyau pour faire fondre au moins partiellement ces fibres thermofusibles, et à déformer le tuyau à sa forme finale, cette dernière étant maintenue par les fibres thermofusibles qui, en se refroidissant, se lient par soudage entre elles et aux autres fibres pour réaliser une ossature.

16. Procédé selon la revendication 15, **caractérisé en ce que**, préalablement à son chauffage et à sa déformation, il est obtenu par enroulement en hélice d'une bande composite avec chevauchement partiel des spires, les parties de spires en chevauchement étant solidarisées entre elles, notamment par collage ou par fusion partielle sous pression.

17. Procédé selon la revendication 16, **caractérisé en ce que** la bande composite est obtenue par l'assemblage, préalablement à l'enroulement en hélice, de deux bandes élémentaires, constituées par lesdites couches extérieure et intérieure, cet assemblage se faisant par collage ou par fusion partielle sous pression et les deux bandes étant de préférence assemblées et superposées sur leur largeur commune.

## Patentansprüche

1. Schlauch für den Transport von gasförmigen Fluiden, besonders in Motorfahrzeugen, und insbesondere für den Einlaß der Verbrennungsluft des Motors oder für die Belüftung des Fahrgastraums, mit einer inneren Schicht (2) und einer äußeren Schicht (1), wobei die innere Schicht aus einem Faservliesmaterial besteht, **dadurch gekennzeichnet, daß** die Außenschicht (1) aus einem fluiddichten, geschmeidigen Material besteht, und die innere Faservliesschicht (2) fest mit der Außenschicht verbunden ist.

2. Schlauch nach Anspruch 1, **dadurch gekennzeichnet, daß** die innere Schicht (2) auf die äußere Schicht (1) geklebt oder durch teilweises Schmelzpreßschweißen aufgebracht wird.

3. Schlauch nach einem der Ansprüche 1 und 2, **dadurch gekennzeichnet, daß** die Außenschicht aus einem dünnen geschmeidigen Film mit einer Stärke von vorzugsweise etwa 60 Mikron besteht.

4. Schlauch nach einem der Ansprüche 1 bis 3, **dadurch gekennzeichnet, daß** die Außenschicht aus Polyolefin, insbesondere aus Polyethylen ist.

5. Schlauch nach einem der Ansprüche 1 bis 4, **dadurch gekennzeichnet, daß** die Innenschicht von der Art Polyester ist.

6. Schlauch nach Anspruch 5, **dadurch gekennzeichnet, daß** die Innenschicht etwa 20 Gew.-% Copolyesterfasern mit einem Schmelzpunkt von etwa 140°C enthält, während der Rest aus Polyesterfasern mit einem Schmelzpunkt von etwa 180°C besteht.

7. Schlauch nach einem der Ansprüche 1 bis 6, **dadurch gekennzeichnet, daß** die beiden Schichten über ihre gemeinsame Breite übereinander liegen.

8. Schlauch nach einem der Ansprüche 1 bis 7, **dadurch gekennzeichnet, daß** die beiden Schichten spiralförmig aufgerollt sind mit teilweisem Überlappen der aufeinanderfolgenden Windungen.

9. Schlauch nach Anspruch 8, **dadurch gekennzeichnet, daß** ein spiralförmiger Verstärkungsdraht (3), zum Beispiel aus Metall oder Kunststoffmaterial, insbesondere aus Polyester, zwischen die überlappenden Windungsbereiche gelegt ist.

10. Schlauch nach Anspruch 9, **dadurch gekennzeichnet, daß** der Verstärkungsdraht mit der Außenseite der Außenschicht einer Windung und der Innenseite der Außen- oder Innenschicht der folgenden Windung in direktem Kontakt steht.

11. Schlauch nach einem der Ansprüche 9 und 10, **dadurch gekennzeichnet, daß** die Innenschicht zu beiden Seiten des Verstärkungsdrahts angeordnet ist.

12. Schlauch nach einem der Ansprüche 9 und 10, **dadurch gekennzeichnet, daß** die Innenschicht sich nur auf einer Seite des Verstärkungsdrahts befindet.

13. Schlauch nach einem der Ansprüche 8 bis 11, **dadurch gekennzeichnet, daß** die Innenschicht nur auf dem Teil einer Windung vorhanden ist, der nicht die vorhergehende Windung überlappt.

14. Verfahren zur Herstellung eines Schlauchs gemäß einem der Ansprüche 1 bis 13 für den Transport von gasförmigen Fluiden, insbesondere in Motorfahrzeugen, und vor allem zum Einlaß der Verbrennungsluft des Motors oder zur Belüftung des Fahrgastraums, **dadurch gekennzeichnet, daß** es darin besteht:
- eine Außenschicht (1) aus einem fluiddichten, geschmeidigen Material zu verwenden,
- eine Innenschicht (2) aus Faservlies zu verwenden, und
- die Innenschicht aus Faservlies fest mit der Außenschicht zu verbinden.

15. Verfahren zur Herstellung eines Schlauchs nach Anspruch 14, **dadurch gekennzeichnet, daß** es darin besteht, die innere Faserschicht zumindest teilweise aus wärmeschmelzenden Fasern herzustellen, den Schlauch zu erwärmen, um diese wärmeschmelzenden Fasern zumindest teilweise zu schmelzen, und den Schlauch in seine endgültige Form zu verformen, wobei diese endgültige Form von den wärmeschmelzenden Fasern gehalten wird, die sich beim Abkühlen durch Schweißen miteinander und mit den anderen Fasern verbinden, um ein Tragwerk zu bilden.

16. Verfahren nach Anspruch 15, **dadurch gekennzeichnet, daß** der Schlauch vor seinem Erwärmen und vor seinem Verformen durch spiralförmiges Aufwickeln eines zusammengesetzten Bandes mit teilweisem Überlappen der Windungen erhalten wird, wobei die überlappenden Bereiche der Windungen fest miteinander verbunden werden, insbesondere durch Kleben oder durch teilweises Preßschmelzen.

17. Verfahren nach Anspruch 16, **dadurch gekennzeichnet, daß** das zusammengesetzte Band vor dem spiralförmigen Aufwickeln durch das Zusammenfügen von zwei Elementarbändern erhalten wird, die aus der Außen- und der Innenschicht bestehen, wobei dieses Zusammenfügen durch Kleben oder teilweises Preßschmelzen erfolgt, und die beiden Bänder vorzugsweise über ihre gemeinsame Breite zusammengefügt und übereinandergelegt werden.

## Claims

1. A pipe for carrying gaseous fluid, more particularly in motor vehicles, and particularly for the admission of air for combustion for the engine or for ventilation of the vehicle interior, wherein said pipe comprises an inner layer (2) and an outer layer (1) of a fluid-tight flexible material and said inner layer (2) being in a non-woven fibrous material **characterized in that** said outer layer (1) is in a fluid-tight flexible material and said inner non-woven fibrous layer (2) is secured to said outer layer.

2. A pipe according to claim 1, **characterized in that** the inner layer (2) is glued or welded by partial melting under pressure to the outer layer (1).

3. A pipe according to claim 1 or 2, **characterized in that** the outer layer consists of a thin flexible film of a thickness preferably of about 60 microns.

4. A pipe according to one of claims 1 to 3, **characterized in that** the outer layer is of a polyolefin, more particularly polyethylene.

5. A pipe according to one of claim 1 to 4, **characterized in that** the inner layer is of the polyester type.

6. A pipe according to claim 5, **characterized in that** the inner layer comprises approximately 20% by weight of copolyester fibres having a melting point of about 140°C, the remainder being polyester fibres having a melting point of about 180°C.

7. A pipe according to one of claims 1 to 6, **characterized in that** the two layers are superimposed over their common width.

8. A pipe according to one of claims 1 to 7, **characterized in that** the two layers are helically wound with partial overlapping of the successive turns.

9. A pipe according to claim 8, **characterized in that** a helical reinforcing thread (3), eg of metal or plastic, more particularly polyester, is interposed between the overlapping turn parts.

10. A pipe according to claim 9, **characterized in that** the reinforcing thread is in direct contact with the outer surface of the outer layer of a turn and the inner surface of the outer or inner layer of the next turn.

11. A pipe according to claim 9 or 10, **characterized in that** the inner layer is situated on either side of the reinforcing thread.

12. A pipe according to claims 9 or 10, **characterized in that** the inner layer is situated only on one side of the reinforcing thread.

13. A pipe according to one of claims 8 to 11, **characterized in that** the inner layer is present only on that part of a turn which does not overlap the previous turn.

14. Method of producing a pipe as defined in one of claims 1 to 13, for the carrying of gaseous fluids, in particular in motor vehicles and more particularly for the admission of air for combustion in the engine or for the ventilation of the interior of the vehicle, **characterized in that** it comprises the steps of:
- taking an outer layer (1) in a flexible fluid-tight material,
- taking an inner layer (2) in a fibrous non-woven material, and
- securing said fibrous non-woven inner layer to said outer layer.

15. A method of producing a pipe according to claim 14, wherein said method comprises making the inner fibrous layer at least partially of thermofusible fibres, heating the pipe to at least partially melt said thermofusible fibres, and subjecting the pipe to deformation into its final shape, the latter being maintained by the thermofusible fibres which, as they cool, bond by welding to one another and to the other fibres to produce a framework.

16. A method according to claim 15, **characterized in that** prior to its heating and its deformation the pipe is produced by helically winding a composite strip with partial overlapping of the turns, the overlapping turn parts being secured to one another, more particularly by gluing or by partial melting under pressure.

17. A method according to claim 6, **characterized in that** the composite strip is produced by connecting two elementary strips, prior to the helical winding, said elementary strips being formed by the said outer and inner layers, the connection being made by gluing or by partial melting under pressure and the two strips preferably being connected and superposed over their common width.
